# EUROPEAN PATENT APPLICATION

(11) **EP 4 400 557 A1**
(43) Date of publication of application: **17.07.2024**
(21) Application number: 22863331.9
(22) Date of filing: 26.08.2022
(51) Int. Cl.: C09K 11/02, C09K 11/88, B82Y 20/00, B82Y 30/00, B82Y 40/00

(54) **COATED QUANTUM DOT MATERIAL AND PREPARATION METHOD THEREFOR, AND QUANTUM DOT OPTICAL DEVICE**

(30) Priority: 06.09.2021 CN 202111036932; 10.11.2021 CN 202111328760
(71) Applicant: Zhu, Xiaobo, Guangzhou, Guangdong 510700 (CN); Cannano Jiayuan (Guangzhou) Science & Technology Co., Ltd., Guangzhou, Guangdong 510700 (CN)
(72) Inventor: ZHU, Xiaobo, Guangzhou, Guangdong 510530 (CN)
(74) Representative: Studio Torta S.p.A.
(86) International application number: PCT/CN2022/115200
(87) International publication number: WO 2023/030194

(57) **Abstract**

The disclosure belongs to the technical field of quantum dot materials, and particularly relates to a quantum dot coating material and a preparation method therefor, and a quantum dot optical device. The quantum dot coating material includes a quantum dot core material and an inorganic salt coating agent, where the quantum dot core material includes an oil-soluble quantum dot, the inorganic salt coating agent has solubility less than 0.01 g per 100g of water and a thermal decomposition temperature higher than 300°C, and a ratio of mass of the quantum dot core material to moles of the inorganic salt coating agent in the quantum dot coating material is 1 :0.001 g/mol-1:0.05 g/mol. The preparation method includes: S1: mixing a quantum dot core material, an organic solvent, and an oil-soluble cation precursor to obtain a first mixed solution; S2: heating the first mixed solution at a heating temperature higher than 90°C; and S3: dropwise adding an anion aqueous solution into a first heated mixed solution. The quantum dot coating material provided by the disclosure has high-temperature processability, desirable light resistance, water resistance, and oxygen resistance, and high stability.

## Description

### Cross-Reference to Related Application

The disclosure claims the priority of Chinese Patent Application No. 202111036932.8, filed with the Chinese Patent Office on September 6, 2021 and entitled "Quantum Dot Coating Material and Preparation Method Therefor, and Quantum Dot Optical Device", and Chinese Patent Application No. 202111328760.1, filed with the Chinese Patent Office on November 10, 2021 and entitled "Quantum Dot Coating Material and Preparation Method Therefor, and Quantum Dot Optical Device", which are incorporated in their entireties herein by reference.

### Technical Field

The disclosure belongs to the technical field of quantum dot materials, and particularly relates to a quantum dot coating material and a preparation method therefor, and a quantum dot optical device.

### Background

Quantum dots, a type of quasi-zero-dimensional fluorescent semiconductor nanocrystals, are expected to have a broad application prospect in the fields of illumination and display because of their excellent fluorescent properties (a high quantum yield, a continuous and adjustable fluorescence emission wavelength, a narrow full width at maximum peak, etc.). However, a quantum dot material is susceptible to light, heat, water, oxygen, etc. when processed and used. In consequence, it is difficult to maintain the fluorescent properties for a long time. In particular, when a quantum dot plate structure is formed, the quantum dots can hardly maintain their desirable fluorescent properties after a high-temperature forming or curing step on account of its undesirable high-temperature tolerance, hindering its development in the fields of illumination and display.

It is common practice to address the problems in the following two ways. One way is to protect a quantum dot material with a water-oxygen barrier structure. For example, in the earliest patent applied by Nanosys and 3M, two water-oxygen barrier film layers are attached on each side of a quantum dot layer to protect quantum dots (CN201480005245.1). However, the barrier film is costly and requires a complicated coating process in this way.

The other way is to form a quantum dot coating material to protect quantum dots. For example, as disclosed in CN108913142A and CN108285792A, a metal oxide is used to coat a quantum dot material, so as to improve stability. However, some ligands (such as a fatty acid and a thiol) of the quantum dots are oxidized to generate other organic substances (such as a sulfonic acid) at a high temperature along with a temperature rise during processing. In consequence, they enhance acidity, and react with oxides on a surface of the quantum dot, further influencing the quantum dot material.

A method for coating a quantum dot with inorganic salt is provided in CN108893103A, which employs a one-step method to coat a surface of a quantum dot under the action of adsorption. Accordingly, the property of a coated quantum dot can ensure that no obvious light decay is caused after 500 h by blue-light irradiation. However, a quantum dot device is typically required to run smoothly for 1000 h or longer in practical applications. Also, thermal stability of a resulting coated quantum dot has not been disclosed in the patent yet.

No quantum dot material that can satisfy requirements of high-temperature processing and has desirable water and oxygen resistance has been found in the prior art so far.

### Summary

An objective of the disclosure is to overcome the defects that a quantum dot material lacks high-temperature processability and has undesirable stability and undesirable water resistance in the prior art, and provides a quantum dot coating material and a preparation method therefor, and a quantum dot device. The quantum dot coating material of the disclosure has high-temperature processability, desirable water resistance and oxygen resistance, and desirable stability.

In order to realize the above objective, in a first aspect, the disclosure provides a quantum dot coating material. The quantum dot coating material includes a quantum dot core material and an inorganic salt coating agent, where the quantum dot core material includes an oil-soluble quantum dot, the inorganic salt coating agent has solubility less than 0.01 g per 100g of water and a thermal decomposition temperature higher than 300°C, and a ratio of mass of the quantum dot core material to moles of the inorganic salt coating agent in the quantum dot coating material is 1 :0.001 g/mol-1 :0.05 g/mol, preferably 1 :0.002 g/mol-1 :0.02 g/mol, and more preferably 1 :0.003 g/mol-1 :0.005 g/mol.

Further, the quantum dot core material has a particle size of 3 nm-15 nm, and the inorganic salt coating agent has a coating thickness of 0.5 nm-20 nm.

Further, the quantum dot coating material of the disclosure has a quantum yield of 70% or higher after high-temperature thermal processing at 200°C-300°C, and a quantum dot device obtained after thermal processing has light decay less than 20%, preferably less than 10%, and more preferably less than 5% after undergoing a high-temperature and high-humidity blue light accelerated aging test for 1000 h.

Further, the quantum dot coating material has a quantum yield of 80% or higher, and preferably 90% or higher after thermal processing at 200°C-300°C.

Further, a preparation method for the quantum dot coating material includes:
S1: mixing the quantum dot core material, an organic solvent, and an oil-soluble cation precursor to obtain a first mixed solution, where the quantum dot core material includes an oil-soluble quantum dot, and the organic solvent has a boiling point higher than water;
S2: heating the first mixed solution at a heating temperature higher than 90°C; and
S3: dropwise adding an anion aqueous solution required for growth of inorganic salt into a first heated mixed solution for a reaction to obtain the quantum dot coating material.

In a second aspect, the disclosure provides a preparation method for a quantum dot coating material. The quantum dot coating material includes a quantum dot core material and an inorganic salt coating agent. The preparation method includes:
S1: mixing a quantum dot core material, an organic solvent, and an oil-soluble cation precursor to obtain a first mixed solution, where the quantum dot core material includes an oil-soluble quantum dot, and the organic solvent has a boiling point higher than water;
S2: heating the first mixed solution at a temperature higher than 90°C; and
S3: dropwise adding an anion aqueous solution required for growth of inorganic salt into a first heated mixed solution for a reaction to obtain the quantum dot coating material.

Further, a ratio of mass of the quantum dot to moles of the oil-soluble cation precursor in S1 is 1 :0.001 g/mol-1 :0.05 g/mol, preferably 1 :0.002 g/mol-1 :0.02 g/mol, and more preferably 1 :0.003 g/mol-1:0.006 g/mol.

Further, the heating temperature in S2 is 100°C or higher. It should be noted that an upper limit of the heating temperature is not particularly limited, but the heating temperature is preferably set to 200°C or below in consideration of requirements on an apparatus, energy saving, etc.

Further, a heating time in S2 is 10 min-60 min.

Further, a dropwise adding rate in S3 is 0.5 mL/min-2 mL/min, and preferably 1 mL/min-1.5 mL/min.

In a third aspect, the disclosure provides a quantum dot coating material prepared through the preparation method in the second aspect.

Further, a ratio of mass of a quantum dot core material to moles of an inorganic salt coating agent in the quantum dot coating material is 1 :0.001 g/mol-1 :0.05 g/mol, preferably 1 :0.002 g/mol-1:0.02 g/mol, and more preferably 1 :0.003 g/mol-1:0.005 g/mol.

Further, the quantum dot coating material has a quantum yield of 70% or higher, preferably 80% or higher, and more preferably 90% or higher after high-temperature thermal processing at 200°C-300°C, and a quantum dot device obtained after thermal processing has light decay less than 20%, preferably less than 10%, and more preferably less than 5% after undergoing a high-temperature and high-humidity blue light accelerated aging test for 1000 h.

In a fourth aspect, the disclosure provides a quantum dot device. The quantum dot device includes the quantum dot coating material in the first aspect or the third aspect.

In the prior art, a quantum dot coating material typically has a layer thickness of 0.5 nm-20 nm. However, the specific influence of the thickness on light resistance, heat resistance, water resistance, and oxygen resistance of the quantum dot material is unclear. The quantum dot coating materials having the same coating layer thickness can have hugely different stability. Moreover, a preferred thickness range to stability of the quantum dot coating material has not been found yet. No correlation research of coating structure parameters of the quantum dot coating material on stability of the quantum dot coating material has been performed in the prior art so far. The inventors of the disclosure found that compared with uncertain thickness and stability of the quantum dot coating material, a ratio of mass of a quantum dot core material to moles of an inorganic salt coating agent can be optimized to effectively improve light resistance, heat resistance, water resistance, and oxygen resistance of the quantum dot coating material. By forming a coating layer at a specific amount, the quantum dot material can have remarkably improved high-temperature processability, and has desirable light resistance, water resistance, and oxygen resistance, that is, excellent stability. At present, a reason why the ratio of the mass of the quantum dot core material to the moles of the inorganic salt coating agent influences the light resistance, heat resistance, water resistance, and oxygen resistance of the quantum dot coating material is unclear. One possible reason is that a coating amount of a coating layer satisfying the ratio of the mass of the quantum dot core material to the moles of the inorganic salt coating agent is more preferable to forming of a coating layer having a density and/or size satisfying practical application requirements. Accordingly, water, oxygen, etc. can be further inhibited from making a contact with a quantum dot, the optical property of the quantum dot core material cannot be obviously influenced while occurrence of unfavorable factors such as quenching caused by water and oxygen can be prevented. The coating amount can enable a surface of the quantum dot to be directly connected to a sufficient amount of coating layer on a lattice level. Therefore, the exposure probability of defects existing on the surface of the quantum dot and tending to become a starting point of a reaction such as phase transition in the past is greatly reduced, so that the light resistance and the heat resistance of the quantum dot are greatly improved, and the influence from light, heat, etc. on the quantum dot core material is reduced. Moreover, the coating amount of the coating agent within the above ratio range will not cause excessive contact surface stress between an inorganic salt structure and a quantum dot structure, and accordingly an original lattice structure will not become defective under stress or influence light transmission.

The quantum dot coating material of the disclosure breaks through the technical bottleneck that the quantum dot material lacks the high-temperature processability. Therefore, the material and polystyrene (PS), etc. can be directly mixed and thermally processed into the optical device, such as a quantum dot diffusion plate, a light guide plate, a function plate, etc. Accordingly, a manufacturing cost is greatly reduced, a preparation process is optimized, a loss of quantum yields before and after processing is reduced, and optical stability of the quantum dot optical device is improved.

The disclosure further provides the preparation method for the quantum dot coating material. The preparation method includes: pre-mixing the quantum dot and the oil-soluble cation precursor for growth of inorganic salt and pre-heating a resulting solution; enabling the surface of the quantum dot to adsorb a vast number of cations in an oil phase; and then dropwise adding an anion aqueous phase solution, which is favorable to dispersion of an anion precursor into a resulting solution. Since the first heated mixed solution has a high temperature, which is close to or even higher than the boiling point of water, when small-sized anion drops are added dropwise, the aqueous solvent is rapidly evaporated. Moreover, the anions are rapidly combined with the cations on the surface of the quantum dot at a dropwise adding interface to form a dense inorganic salt coating layer. Therefore, the quantum dot coating material having a high ratio of the coating layer to the quantum dot core material is obtained. Compared with a preparation process for a coating layer and a single-phase coating layer only through adsorption, the method can obtain a denser and/or larger-sized inorganic salt coating layer. Compared with quantum dot coating materials prepared through other liquid phase methods, the prepared quantum dot coating material has an excellent high-temperature processability, the desirable light resistance, water resistance, and oxygen resistance, and the high stability.

### Brief Description of the Drawings

The drawings of the description are used to provide a further understanding of the disclosure as a constituent part of the disclosure. The illustrative examples of the disclosure and descriptions of the illustrative examples are used to explain the disclosure, and do not constitute an improper limitation on the disclosure. In the figures:
Fig. 1 is a schematic structural diagram of a quantum dot coating material.
Fig. 2 is an electron micrograph of a quantum dot coating material according to Example 1 of the disclosure.
Fig. 3 is an electron micrograph of a quantum dot material according to Comparative Example 1 of the disclosure.
Fig. 4 is an aging test curve diagram of examples and comparative examples of the disclosure.

### Detailed Description of the Embodiments

The endpoints of ranges and any values disclosed herein are not limited to the precise ranges or values. These ranges or values should be interpreted as encompassing values close to these ranges or values. For numerical ranges, the endpoint values of each range, the endpoint values of each range and an individual point value, and individual point values can be combined with one another to obtain one or more new numerical ranges. These numerical ranges should be deemed as falling with the specific disclosure herein.

In the disclosure, "solubility" refers to solubility of an inorganic salt coating agent in water at 20°C or below.

As described above, in a first aspect, the disclosure provides a quantum dot coating material. The quantum dot coating material includes a quantum dot core material and an inorganic salt coating agent, where the quantum dot core material includes an oil-soluble quantum dot, the inorganic salt coating agent has solubility less than 0.01 g per 100g of water and a thermal decomposition temperature higher than 300°C, and a ratio of mass of the quantum dot core material to moles of the inorganic salt coating agent in the quantum dot coating material is 1:0.001 g/mol-1:0.05 g/mol, preferably 1:0.002 g/mol-1:0.02 g/mol, and more preferably 1:0.003 g/mol-1:0.005 g/mol.

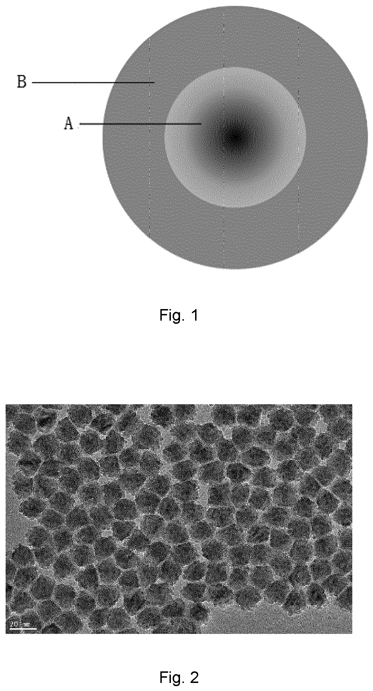

In the disclosure, it can be understood that the quantum dot coating material has a coating structure, as shown in Fig. 1. Specifically, the inorganic salt coating agent (that is, B shown in Fig. 1) coats the quantum dot (that is, A shown in Fig. 1).

With the above ratio of the mass of the quantum dot core material to the moles of the inorganic salt coating agent, the quantum dot coating material has excellent light resistance, heat resistance, water resistance, and oxygen resistance. In an alternative embodiment, the quantum dot coating material has a quantum yield of 70% or higher, preferably 80% or higher, and more preferably 90% or higher after high-temperature thermal processing at 200°C-300°C. In an alternative embodiment, a quantum dot device obtained after the above thermal processing has light decay less than 20%, preferably less than 10%, and more preferably less than 5% after undergoing a high-temperature and high-humidity blue light accelerated aging test for 1000 h. The test shows that after thermal processing, the quantum dot device prepared from the quantum dot coating material can still have light decay less than 20% after undergoing a high-temperature and high-humidity blue light accelerated aging test for 3500 h.

Conditions of the high-temperature and high-humidity blue light accelerated aging test include: 60°C, 90% humidity, 40 W/m², and 450-nm blue light.

The quantum dot coating material of the disclosure can have the above quantum yield and light decay after thermal processing. Under the same conditions, an existing quantum dot coating material typically has a quantum yield less than 70%, and light decay of 40% or higher after undergoing a high-temperature and high-humidity blue light accelerated aging test for 1000 h.

A specific type of the quantum dot core material is not limited in the disclosure. Any existing quantum dot material containing an oil-soluble quantum dot can be used in the disclosure. A quantum dot material of a non-ligand portion of the oil-soluble quantum dot can be selected from at least one of semiconductor compounds of family II-IV, family II-VI, family II-V, family III-V, family III-VI, family IV-VI, family I-III-VI, family II-IV-VI, and family II-IV-V of the periodic table of elements; and/or at least one of semiconductor compounds having a core-shell structure and consisting of at least two of semiconductor compounds of family II-IV, family II-VI, family II-V, family III-V, family III-VI, family IV-VI, family I-III-VI, family II-IV-VI, and family IIIV-V; and/or at least one of a perovskite nanoparticle material, a metal nanoparticle material, a metal oxide nanoparticle material, and a carbon nano-material. The quantum dot core material is commercially available or synthesizable through an existing method.

It can be understood that except for the oil-soluble quantum dot, the quantum dot core material can further contain other non-oil-soluble quantum dot components. Preferably, the quantum dot core material contains only the oil-soluble quantum dot.

The inorganic salt coating agent of the disclosure is not particularly limited as long as the requirements of the above solubility and thermal decomposition temperature are satisfied.

Further, the inorganic salt coating agent can be selected from one or more of alkaline earth metal salt, metal salt of family IIIA, metal salt of family IVA, and transition metal salt.

For example, the alkaline earth metal salt, the metal salt of family IIIA, the metal salt of family IVA, and the transition metal salt can be selected from one or more of sulfate, carbonate, molybdate, borate, and halogen salt of the above metal.

The disclosure has no particular requirements on a particle size of the quantum dot core material and a thickness of a coating layer formed by the inorganic salt coating agent. The light resistance, heat resistance, water resistance, and oxygen resistance that are superior to those in the prior art can be obtained as long as the ratio of the mass of the quantum dot core material to the moles of the inorganic salt coating agent satisfies the range defined by the disclosure. In addition, as described above, the specific influence from the thickness on the light resistance, heat resistance, water resistance, and oxygen resistance of the quantum dot material is unclear in the art. If the above limitation of the disclosure is not satisfied, it cannot be ensured that the light resistance, heat resistance, water resistance, and oxygen resistance that are superior to those in the prior art are obtained no matter how the thickness is adjusted.

Preferably, the quantum dot core material has a particle size of 3 nm-15 nm, and a coating layer formed by the inorganic salt coating agent has a thickness of 0.5 nm-20 nm. A preferred upper thickness limit herein is provided in consideration of various aspects such as preparation convenience and an economical efficiency. It should be emphasized that even if a thickness is out of the preferred range, as long as the ratio of the mass of the quantum dot core material to the moles of the inorganic salt coating agent satisfies the above limitation of the disclosure, the technical effect of the disclosure can also be realized. In the above ranges of the particle size of the quantum dot core material and the thickness of the coating layer, the coating layer is likely to form a coating layer structure having a moderate density compared with the prior art. The desirable optical properties can be obtained while excellent light resistance, heat resistance, water resistance, and oxygen resistance can be satisfied.

Preferably, a preparation method for the quantum dot coating material includes: S1: the quantum dot core material, an organic solvent, and an oil-soluble cation precursor are mixed to obtain a first mixed solution, where the quantum dot core material includes an oil-soluble quantum dot, and the organic solvent has a higher boiling point than water; S2: the first mixed solution is heated at a heating temperature higher than 90°C; and S3: an anion aqueous solution required for growth of inorganic salt is dropwise added into a first heated mixed solution for a reaction to obtain the quantum dot coating material. An alternative range of the specific process is the same as that in the preparation method provided in a second aspect of the disclosure. Reference can be specifically made to the subsequent description on the invention in the second aspect.

A liquid phase method for preparing a quantum dot coating material has simple process, easy industrialization, etc. The above preparation method is merely one preparation method for the quantum dot coating material provided by the disclosure. The quantum dot coating material of the disclosure can also be prepared in other ways, and the disclosure is not limited to the above preparation method.

In the second aspect, the disclosure provides a preparation method for a quantum dot coating material. The quantum dot coating material includes a quantum dot core material and an inorganic salt coating agent. The preparation method includes:
S1: a quantum dot core material, an organic solvent, and an oil-soluble cation precursor are mixed to obtain a first mixed solution, where the quantum dot core material includes an oil-soluble quantum dot, and the organic solvent has a higher boiling point than water;
S2: the first mixed solution is heated at a heating temperature higher than 90°C; and
S3: an anion aqueous solution required for growth of inorganic salt is dropwise added into a first heated mixed solution for a reaction to obtain the quantum dot coating material.

In the second aspect, the alternative ranges of the quantum dot core material and the inorganic salt coating agent are the same as those for the quantum dot core material and the inorganic salt coating agent in the first aspect, which will not be repeated herein.

In the disclosure, in S1, the quantum dot core material and the oil-soluble cation precursor are formed into a first oil-phase mixed solution in the organic solvent. A surface of the quantum dot core material can adsorb a vast number of cations through the high solubility of the oil-soluble quantum dot and the oil-soluble cation precursor in the organic solvent. Accordingly, more inorganic salt can grow by dropwise adding anions in a later stage.

Further, a ratio of mass of the quantum dot to moles of the oil-soluble cation precursor in S1 is 1 :0.001 g/mol-1 :0.05 g/mol, preferably 1 :0.002 g/mol-1 :0.02 g/mol, and more preferably 1 :0.003 g/mol-1:0.006 g/mol.

Under the solution employing the above usage amount ratio of the quantum dot to the oil-soluble cation precursor, the surface of the quantum dot can more properly and uniformly adsorb the cations.

The organic solvent is not specifically limited in the disclosure, as long as it has a higher boiling point than water. Those skilled in the art can select a suitable organic solvent depending on the solubility of the quantum dot and the oil-soluble cation precursor. The selected organic solvent can have a proper coordination reaction with the quantum dot core material or not. Non-limitative examples of the organic solvent include liquid paraffin, aromatic hydrocarbon, long-chain alkane, a fatty acid, octadecene, etc.

The usage amount of the organic solvent is determined as long as the quantum dot core material and the oil-soluble cation precursor can be sufficiently mixed. Those skilled in the art can make a proper selection according to the usage amounts of the quantum dot core material and the oil-soluble cation precursor.

The disclosure does not limit a mixing manner of all the raw materials in S1 in any ways. The raw materials can be directly mixed in one step. Alternatively, two raw materials can be mixed firstly, and then a resulting raw material is mixed with another raw material. Alternatively, the raw materials can be mixed in batches.

In a specific embodiment, in S1, the quantum dot and the oil-soluble cation precursor can be separately added into organic solvents to obtain a quantum dot core material solution and an oil-soluble cation precursor solution. Then the quantum dot core material solution and the oil-soluble cation precursor solution are mixed. In another specific embodiment, the oil-soluble cation precursor can be added to the organic solvent firstly, and then the quantum dot is added into a resulting organic solvent. Alternatively, the quantum dot core material can be added into the organic solvent firstly, and then the oil-soluble cation precursor is added into a resulting organic solvent.

In another specific preferred embodiment, the method further includes: before S1, the quantum dot core material is prepared into a quantum dot oil solution, and then S1 is performed.

Under the above preferred solution, the quantum dot core material, in the form of the quantum dot oil solution, is mixed with the oil-soluble cation precursor and the organic solvent. Therefore, the quantum dot core material can more uniformly adsorb the cations.

The organic solvent used for preparing the quantum dot oil solution can be the same as the organic solvent used for subsequently mixing the quantum dot core material and the oil-soluble cation precursor or not. Preferably, the organic solvents are the same.

In the disclosure, heating is controlled in S2 to make a temperature of the first mixed solution close to or higher than the boiling point of water. Moreover, in combination with dropwise adding of the anion aqueous solution in S3, the aqueous solvent can be rapidly evaporated in a dropwise adding process. The anions are rapidly combined with the cations on the surface of the quantum dot at a dropwise adding interface, so that an inorganic salt coating layer can grow and be formed.

Compared with an existing method, the preparation method consisting of the above steps simultaneously utilizes an adsorption action and an ionic bond generation action to enable more denser inorganic salt coating agents to grow on the surface of the quantum dot more stably, so as to form a coating structure. Therefore, the quantum dot coating material has the comprehensive properties of high-temperature resistance, humidity resistance, oxidation resistance, and illumination resistance.

Preferably, the heating temperature in S2 is 100°C or higher.

In the disclosure, preferably, a heating time in S2 is 10 min-60 min.

Under the above preferred heating conditions, the oil-soluble cation precursor can be better adsorbed to the quantum dot core material. Moreover, the selected heating temperature is also conducive to rapid evaporation of the aqueous solvent during dropwise adding, so that the inorganic salt can better grow and react.

In the disclosure, preferably, heating in S2 is performed under an inert atmosphere. Examples of the inert atmosphere can include argon or nitrogen. Through the preferred solution, the quantum dot core material can be further prevented from being oxidized by making contact with oxygen in air before being coated with the inorganic salt.

More preferably, heating in S2 is performed under stirring. Stirring is conducive to mass transfer. The quantum dot core material can fully adsorb a cation precursor while the temperature is more uniformly distributed.

According to the disclosure, preferably, a dropwise adding speed in S3 is 0.5 mL/min-2 mL/min, preferably 1 mL/min-1.5 mL/min. If the dropwise adding speed is too high, excessive supersaturation is caused at the interface, and the insoluble salt formed is more likely to be spontaneously nucleated rather than grow on the surface of the quantum dot. If the dropwise adding speed is too low, the solvent is evaporated too rapidly since the temperature of the solvent is higher than the boiling point of water, which is not favorable to a chemical reaction at the interface. Under the preferred specific dropwise adding speed solution of the disclosure, a suitable amount of coating layer can be formed at the dropwise adding interface. Accordingly, the light resistance, heat resistance, water resistance, and oxygen resistance of the obtained quantum dot coating material can be further improved.

In the disclosure, those skilled in the art can select specific types of the cation precursor and the anion aqueous solution for forming the insoluble inorganic salt according to the type of the inorganic salt coating agent. Particularly, the disclosure requires to use the oil-soluble cation precursor, so that the surface of the quantum dot can better adsorb the cations.

Preferably, the oil-soluble cation precursor is selected from one or more of an oil-soluble alkaline earth metal salt precursor, an oil-soluble IIIA metal salt precursor, an oil-soluble IVA metal salt precursor, and an oil-soluble transition metal salt precursor.

The specific types of the oil-soluble alkaline earth metal salt precursor, the oil-soluble IIIA metal salt precursor, the oil-soluble IVA metal salt precursor, and the oil-soluble transition metal salt precursor can be determined as long as the inorganic salt coating agent can be prepared. For example, the oil-soluble alkaline earth metal salt, the oil-soluble IIIA metal salt precursor, the oil-soluble IVA metal salt precursor, and the oil-soluble transition metal salt are preferably selected from stearate, phosphonate, oleate, oleylamine salt, etc. that contains alkaline earth metal, IIIA metal, IVA metal, and transition metal.

In the disclosure, the anions in the anion aqueous solution are determined according to the type of target inorganic salt. The cations in the anion aqueous solution can be any cations as long as growth of the inorganic salt is not influenced. Examples of ions include sodium ion, potassium ion, ammonium ion, etc.

An anion concentration of the anion aqueous solution is not particularly limited in the disclosure as long as sufficient dissolution can be ensured and the aqueous solvent in the anion aqueous solution can be rapidly evaporated in the dropwise adding process. Illustratively, the anion aqueous solution can have an anion concentration of 0.05 mol/L-10 mol/L.

The usage amount of the anion aqueous solution is determined as long as a sufficient reaction between the cations in the oil-soluble cation precursor and the anions can be satisfied. According to the disclosure, preferably, the method further includes: after dropwise adding in S3, heat preservation is continued to be performed for 15 min-120 min. When heat preservation is continued to be performed, the cations can continue reacting with the anions, so that a product after the sufficient reaction can be obtained.

In a third aspect, the disclosure provides a quantum dot coating material prepared through the preparation method for a quantum dot coating material in the second aspect.

Preferably, the quantum dot coating material can obtain the same coating structure having a sufficient amount of coating layer as in the first aspect, and has excellent high-temperature processability, excellent light resistance, heat resistance, water resistance and oxygen resistance, and excellent stability.

In a fourth aspect, the disclosure provides a quantum dot device. The quantum dot device includes the quantum dot coating material in the first aspect or the third aspect.

The disclosure does not limit the existing form of the quantum dot device in any ways. The existing form includes, but is not limited to, the forms of any quantum dot devices including a quantum dot diffusion plate, a light guide plate, and a function plate in the fields of illumination and display.

The disclosure does not limit a method for preparing a quantum dot device from the quantum dot coating material in any ways. The quantum dot device can be prepared through an existing method. For example, the quantum dot coating material and polystyrene (PS) particles, etc. can be directly mixed and processed to prepare the quantum dot device.

The disclosure is described in more detail below with reference to examples.

### Example 1

Oil-soluble cadmium selenide (CdSe)/zinc sulfide (ZnS) quantum dots were selected and purified, and 3 g of purified quantum dots were taken for later use.

Then, 300 mL of liquid paraffin was added into a flask, and 0.01 mol of barium stearate and 3 g of the above quantum dots were added to obtain a first mixed solution. Argon was introduced into the flask, the first mixed solution was stirred at 1000 r/min and heated to 120°C, and then heat preservation was continued to be performed for 30 min.

Then, 10 mL of a sodium sulfate aqueous solution was dropwise added into a first mixed solution. A sulfate ion concentration was 1 mol/L, and a dropwise adding speed was set to 1 mL/min.

After dropwise adding, heat preservation was continued to be performed for 1 h, and a resulting solution was purified to obtain a quantum dot coating material having a barium sulfate shell on a surface.

An electron micrograph of the obtained quantum dot coating material is shown in Fig. 2.

### Comparative Example 1

Selection and purification are performed as in Example 1 to obtain 3 g of quantum dot materials.

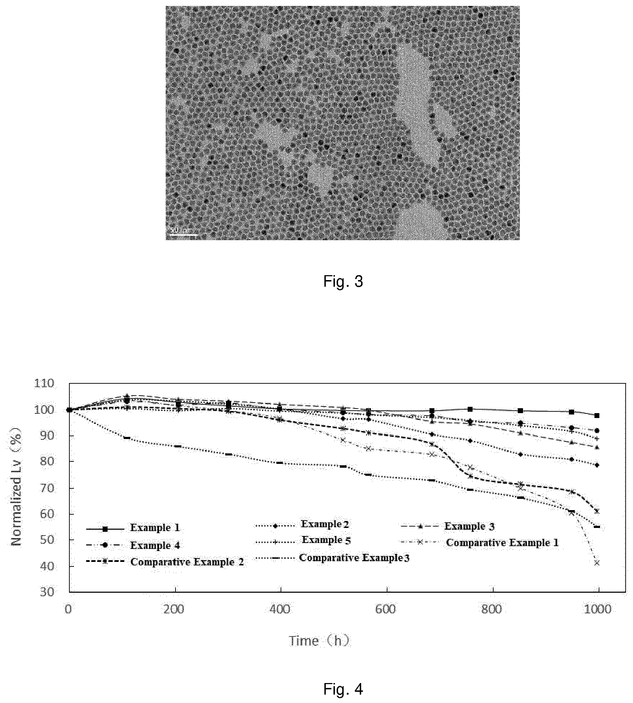

An electron micrograph of the obtained quantum dot material is shown in Fig. 3.

### Comparative Example 2

At first, 3 g of quantum dot materials obtained after selection and purification were performed through the method in Example 1 were dissolved in 300 mL of liquid paraffin and heated to 120°C. Then, 0.01 mol of barium sulfate was added into a resulting solution for a sufficient reaction under stirring, and a resulting solution was purified to obtain a quantum dot material having a barium sulfate shell on a surface.

### Comparative Example 3

At first, 3 g of water-soluble CdSe/ZnS quantum dots, 300 mL of an aqueous solution, and 0.01 mol of barium chloride were added into a flask.

Argon was introduced, and a resulting solution was stirred at 1000r/min. Then, 10 mL of a sodium sulfate aqueous solution (having a sodium sulfate concentration of 1 mol/L) was dropwise added into a resulting solution. A dropwise adding speed was set to 1 mL/min.

After dropwise adding, a resulting solution was continued to be stirred for 1 h and purified to obtain a quantum dot material having a barium sulfate shell on a surface.

### Example 2

The method in Example 1 is used in this example. The differences lie in that 0.005 mol of barium stearate and 5 mL of a sodium sulfate aqueous solution (having the same concentration as that in Example 1) were used.

### Example 3

The method in Example 1 is used in this example. The differences lie in that 0.05 mol of barium stearate and 50 mL of a sodium sulfate aqueous solution (having the same concentration as that in Example 1) were used.

### Example 4

The method in Example 1 is used in this example. The difference lies in that a dropwise adding speed was 2 mL/min.

### Example 5

The method in Example 1 is used in this example. The difference lies in that a dropwise adding speed was 0.5 mL/min.

Some test parameters and test results of the above examples and comparative examples are listed in Table 1.

### Test method

The quantum dot coating materials obtained in the examples and the comparative examples and the PS particles were mixed at 250°C, and prepared into quantum dot PS devices through a micro-extruder and an extrusion pressing plate in a plate vulcanizer. The following tests were then performed.

The above quantum dot PS devices underwent a high-temperature and high-humidity blue light accelerated aging test (under conditions of 60°C, 90% humidity, 40 W/m², and 450-nm blue light) separately, and obtained normalized lightness change curves with time are shown in Fig 4.

The quantum dot coating material before processing and the quantum dot PS optical devices obtained after processing underwent the quantum yield test. The quantum dot PS devices prepared from the quantum dot coating materials in the above examples and comparative examples before processing have the quantum yield of 95%. Results of the quantum yields in all the examples and comparative examples after processing are shown in Table 1.

**Table 1**

| Example No. | Exam ple 1 | Exam ple 2 | Exam ple 3 | Exam ple 4 | Exam ple 5 | Comp arative Exam ple 1 | Comp arative Exam ple 2 | Comp arative Exam ple 3 |
|---|---|---|---|---|---|---|---|---|
| Quantum dot mass (g) | 3.00 | 3.00 | 3.00 | 3.00 | 3.00 | 3.00 | 3.00 | 3.00 |
| Mole number of barium sulfate (mol) | 0.01 | 0.005 | 0.05 | 0.01 | 0.01 | 0 | 0.01 | 0.01 |
| Dropwise adding speed (mL/min) | 1 | 1 | 1 | 2 | 0.5 | 0 | 0 | 1 |
| Quantum dot coating material mass (g) | 5.12 | 3.77 | 6.85 | 4.62 | 4.77 | 3.00 | 3.34 | 3.27 |
| Coating layer mass (g) | 2.12 | 0.77 | 3.85 | 1.62 | 1.77 | 0.00 | 0.34 | 0.27 |
| Ratio of mass of a quantum dot core material to moles of an inorganic salt coating agent | 1: 0.003 | 1: 0.001 | 1: 0.005 | 1: 0.002 | 1: 0.002 | 0 | 1 : 0.000 5 | 1 : 0.000 4 |
| Quantum yield (%) after processing | 94 | 78 | 92 | 91 | 89 | 55 | 68 | 66 |

The CdSe/ZnS core-shell quantum dots are selected as the quantum dot core materials in the examples and the comparative examples. Under the protection of a ZnS shell, coating the ZnS shell with the inorganic salt coating agent almost has no influence on the quantum yield. Therefore, the quantum yields of all the examples and comparative examples before thermal processing are 95%, and vary obviously after thermal processing, which is caused by different protection capacities of different coating layers on the quantum dot core materials. That is, on the basis of different inorganic salt coating layers, the quantum dot coating materials have different heat resistance.

It can be seen from Fig. 4 and Table 1 that compared with the comparative examples, the coating amount of the quantum dot coating material prepared through the preparation method provided by the disclosure is significantly increased compared with that of the inorganic salt coating agent in the prior art. The quantum dot coating material having the ratio of the mass of the quantum dot core material to the moles of the inorganic salt coating agent within the range defined by the disclosure shows excellent high-temperature resistance and desirable light resistance, water resistance, and oxygen resistance, that is, the desirable stability after high-temperature processing.

Further, by comparing Example 1 and Examples 2-3 separately, it can be seen that a quantum dot coating material having a more suitable ratio of the mass of the quantum dot core material to the moles of the inorganic salt coating agent can be obtained by adjusting a raw material proportion. Accordingly, the heat resistance, water resistance, light resistance, and oxygen resistance, and the stability of the quantum dot coating material can be further improved.

Further, by comparing Example 1 and Examples 4-5 separately, it can be seen that through the preferred dropwise adding speed solution of the disclosure, a quantum dot coating material having a more suitable ratio of the mass of the quantum dot core material to the moles of the inorganic salt coating agent can be obtained. Accordingly, the heat resistance, water resistance, light resistance, and oxygen resistance, and the stability of the quantum dot coating material can be further improved.

What are described above are merely the preferred examples of the disclosure, and are not intended to limit the disclosure. Those skilled in the art can make various modifications and variations to the disclosure. Any modifications, equivalent replacements, improvements, etc. made within the spirit and principles of the disclosure should fall within the scope of protection of the disclosure.

## Claims

1. A quantum dot coating material, comprising a quantum dot core material and an inorganic salt coating agent, wherein the quantum dot core material comprises an oil-soluble quantum dot, the inorganic salt coating agent has solubility less than 0.01 g per 100g of water and a thermal decomposition temperature higher than 300°C, and a ratio of mass of the quantum dot core material to moles of the inorganic salt coating agent in the quantum dot coating material is 1 :0.001 g/mol-1:0.05 g/mol, preferably 1:0.002 g/mol-1:0.02 g/mol, and more preferably 1:0.003 g/mol-1:0.005 g/mol.

2. The quantum dot coating material according to claim 1, wherein a quantum dot material of a non-ligand portion of the oil-soluble quantum dot is selected from at least one of semiconductor compounds of family II-IV, family II-VI, family II-V, family III-V, family III-VI, family IV-VI, family I-III-VI, family II-IV-VI, and family II-IV-V of the periodic table of elements; and/or at least one of semiconductor compounds having a core-shell structure and consisting of at least two of semiconductor compounds of family II-IV, family II-VI, family II-V, family III-V, family III-VI, family IV-VI, family I-III-VI, family II-IV-VI, and family IIIV-V; and/or at least one of a perovskite nano-particle material, a metal nano-particle material, a metal oxide nano-particle material, and a carbon nano-material; and
preferably, the inorganic salt coating agent is selected from one or more of alkaline earth metal salt, metal salt of family IIIA, metal salt of family IVA, and transition metal salt.

3. The quantum dot coating material according to claim 1, wherein the quantum dot core material has a particle size of 3 nm-15 nm, and the inorganic salt coating agent has a coating thickness of 0.5 nm-20 nm.

4. The quantum dot coating material according to claim 1, wherein the quantum dot coating material has a quantum yield of 70% or higher after high-temperature thermal processing at 200°C-300°C, and a quantum dot device obtained after thermal processing has light decay less than 20%, preferably less than 10%, and more preferably less than 5% after undergoing a high-temperature and high-humidity blue light accelerated aging test for 1000 h.

5. The quantum dot coating material according to claim 4, wherein the quantum dot coating material has a quantum yield of 80% or higher, and preferably 90% or higher after thermal processing.

6. The quantum dot coating material according to any one of claims 1-5, wherein a preparation method for the quantum dot coating material comprises:
S1: mixing the quantum dot core material, an organic solvent, and an oil-soluble cation precursor to obtain a first mixed solution, wherein the quantum dot core material comprises an oil-soluble quantum dot, and the organic solvent has a higher boiling point than water;
S2: heating the first mixed solution at a heating temperature higher than 90°C; and
S3: dropwise adding an anion aqueous solution required for growth of inorganic salt into a first heated mixed solution for a reaction to obtain the quantum dot coating material.

7. A preparation method for a quantum dot coating material, wherein the quantum dot coating material comprises a quantum dot core material and an inorganic salt coating agent; and the preparation method comprises:
S1: mixing a quantum dot core material, an organic solvent, and an oil-soluble cation precursor to obtain a first mixed solution, wherein the quantum dot core material comprises an oil-soluble quantum dot, and the organic solvent has a higher boiling point than water;
S2: heating the first mixed solution at a heating temperature higher than 90°C; and
S3: dropwise adding an anion aqueous solution required for growth of inorganic salt into a first heated mixed solution for a reaction to obtain the quantum dot coating material.

8. The preparation method for a quantum dot coating material according to claim 7, wherein the organic solvent is at least one of liquid paraffin, aromatic hydrocarbon, long-chain alkane, a fatty acid, or octadecene;
preferably, the oil-soluble cation precursor is selected from one or more of an oil-soluble alkaline earth metal salt precursor, an oil-soluble IIIA metal salt precursor, an oil-soluble IVA metal salt precursor, and an oil-soluble transition metal salt precursor; and
preferably, the anion aqueous solution has an anion concentration of 0.05 mol/L-10 mol/L.

9. The preparation method for a quantum dot coating material according to claim 7, wherein a ratio of mass of the quantum dot to moles of the oil-soluble cation precursor in S1 is 1:0.001 g/mol-1:0.05 g/mol, preferably 1 :0.002 g/mol-1 :0.02 g/mol, and more preferably 1:0.003 g/mol-1:0.006 g/mol.

10. The preparation method for a quantum dot coating material according to claim 7, wherein the heating temperature in S2 is 100°C or higher; and
preferably, a heating time in S2 is 10 min-60 min.

11. The preparation method for a quantum dot coating material according to claim 7, wherein a dropwise adding speed in S3 is 0.5 mL/min-2 mL/min, and preferably 1 mL/min-1.5 mL/min; and
preferably, the preparation method further comprises: continuing to perform heat preservation for 15 min-120 min after dropwise adding in S3.

12. A quantum dot coating material prepared through the preparation method for a quantum dot coating material according to any one of claims 7-11.

13. The quantum dot coating material according to claim 12, wherein a ratio of mass of a quantum dot core material to moles of an inorganic salt coating agent in the quantum dot coating material is 1:0.001 g/mol-1 :0.05 g/mol, preferably 1:0.002 g/mol -1:0.02 g/mol, and more preferably 1 :0.003 g/mol -1:0.005 g/mol.

14. The quantum dot coating material according to claim 12, wherein the quantum dot coating material has a quantum yield of 70% or higher, preferably 80% or higher, and more preferably 90% or higher after high-temperature thermal processing at 200°C-300°C, and a quantum dot device obtained after thermal processing has light decay less than 20%, preferably less than 10%, and more preferably less than 5% after undergoing a high-temperature and high-humidity blue light accelerated aging test for 1000 h.

15. A quantum dot device, comprising the quantum dot coating material according to any one of claims 1-6 or claims 12-14.
